Europäisches Patentamt

European Patent Office

Office européen des brevets

(11) Veröffentlichungsnummer: **0 215 196**
**A2**

## (12) EUROPÄISCHE PATENTANMELDUNG

(21) Anmeldenummer: 86107501.8

(22) Anmeldetag: 03.06.86

(51) Int. Cl.⁴: **B01D 53/36**

(30) Priorität: 10.09.85 DE 3532209

(43) Veröffentlichungstag der Anmeldung:
**25.03.87 Patentblatt 87/13**

(84) Benannte Vertragsstaaten:
**AT BE CH DE FR GB IT LI LU NL SE**

(71) Anmelder: **Didier Engineering GmbH**
**Alfredstrasse 28 Postfach 10 09 45**
**D-4300 Essen 1(DE)**

(72) Erfinder: **Flockenhaus, Claus, Prof. Dr.**
**Tersteegenweg 16**
**D-4300 Essen 1(DE)**
Erfinder: **Merkel, Klaus**
**Schönscheidtstrasse 8**
**D-4300 Essen 13(DE)**
Erfinder: **Laue, Karl-Heinrich**
**Bergische Strasse 41**
**D-4320 Hattingen 16(DE)**
Erfinder: **Sander, Theo**
**Cäsarstrasse 23**
**D-4300 Essen 1(DE)**

(74) Vertreter: **Brückner, Raimund**
**c/o Didier-Werke AG Lessingstrasse 16-18**
**D-6200 Wiesbaden(DE)**

(54) **Verfahren zur selektiven katalytischen Reduktion von Stickoxiden.**

㊼ Die Erfindung bezieht sich auf ein Verfahren zur selektiven katalytischen Reduktion von Stickoxiden mittels Ammoniak als Reduktionsmittel ohne wesentlichen Überdruck in einem ein-oder mehrbettigen Reaktor, wobei zur Vermeidung eines Reduktionsmitteldurchbruches der Reaktor in der Weise ausgelegt und betrieben wird, daß der Umsatz in einem Bett maximal auf 67 % begrenzt wird und man die Reduktionsmittelzugabe entsprechend pro Bett dosiert.

EP 0 215 196 A2

### Verfahren zur selektiven katalytischen Reduktion von Stickoxiden

Die Erfindung bezieht sich auf ein Verfahren zur selektiven katalytischen Reduktion von Stickoxiden mittels Ammoniak als Reduktionsmittel ohne wesentlichen Überdruck in einem ein-oder mehrbettigen Reaktor. Bekannt ist die selektive katalytische Reduktion von Stickoxiden mittels Reduktionsmitteln, wie z.B. Ammoniak. Verwendet werden hierbei üblicherweise Katalysatoren, wie $Fe_2O_3$, $WO_3$, $MOO_3$, $TiO_2$, $Cr_2O_3$ und dergleichen. Die Katalysatoren werden ein-oder mehrbettig angeordnet. Die Reduktion der Stickoxide wird sowohl im Bereich ohne wesentlichen Überdruck, also beispielsweise im Bereich zwischen -1 bar und +1 bar, oder unter Druck durchgeführt. Das erfindungsgemäße Verfahren bezieht sich auf ein solches ohne wesentlichen Überdruck.

Bei dem bekannten Verfahren zur selektiven katalytischen Reduktion von Stickoxiden besteht insbesondere bei Rauchgasen mit hohem $SO_2/SO_3$-Gehalt ein Problem dadurch, daß das Reduktionsmittel nicht vollständig im Katalysatorbett verbraucht wird und somit ein sogenannter Schlupf entsteht, der Nachfolgereaktionen im niedrigen Temperaturbereich zur Folge haben kann. Bekannt ist beispielsweise, daß in Kraftwerken, in denen - schwefelhaltige Brennstoffe eingesetzt werden, die nachgeschalteten Wärmetauscher nachteilig beeinflußt werden. Es ist ferner bekannt, daß hohe Umsätze nur bei hohem Ammoniakverbrauch erzielt werden können. Hieraus geht hervor, daß bei hohem Umsätzen auch der Ammoniakschlupf steigt.

Wählt man beispielsweise als Reduktionsmittel Ammoniak, so verläuft die Reduktion der Stickoxide gemäß den folgenden Grundreaktionen:

$$6 NO + 4 NH_3 \rightarrow 5 N_2 + 6 H_2O$$

$$Q_R = -299163 \text{ J/mol NO}$$

$$6 NO_2 + 8 NH_3 \rightarrow 7 N_2 + 12 H_2O$$

$$Q_R = -453975 \text{ J/mol NO}_2$$

$$NO_2 + NO + 2 NH_3 \rightarrow 2 N_2 + 3 H_2O$$

Unerwünschte und damit zu vermeidende Nebenreaktion sind:

$$4 NH_3 + 3 O_2 \rightarrow 2 N_2 + 6 H_2O$$

$$Q_R = -315900 \text{ J/mol NH}_3$$

$$4 NH_3 + 4 O_2 \rightarrow 2 N_2O + 6 H_2O$$

$$Q_R = -272803 \text{ J/mol NH}_3$$

$$4 NH_3 + 5 O_2 \rightarrow 4 NO + 6 H_2O$$

$$Q_R = -226778 \text{ J/mol NH}_3$$

Bei Überangebot von Ammoniak laufen, sofern genügend Sauerstoff im Gas vorhanden ist, folgende weitere Reaktionen ab:

$$4 NO + 4 NH_3 + O_2 \rightarrow 4 N_2 + 6 H_2O$$

$$2 NO_2 + 4 NH_3 + O_2 \rightarrow 3 N_2 + 6 H_2O$$

Geht man nach dieser Stöchiometrie vor, wird ein Teil des Ammoniaks zur Reduktion der Stickoxide benutzt, der Rest geht durch Oxidation verloren bzw. schlägt als Schlupf durch. Auch größte Katalysatorvorlagen helfen diesem Übel nicht ab.

Aufgabe der vorliegenden Erfindung ist es, ein Verfahren der eingangs genannten Art unter Vermeidung dieser Nachteile so auszugestalten, daß Reduktionsmitteldurchbrüche weitgehend vermieden werden.

Diese Aufgabe wird erfindungsgemäß im wesentlichen dadurch gelöst, daß man den Reaktor in der Weise auslegt und betreibt, daß der Umsatz pro Bett auf maximal 67 % an Stickoxid begrenzt wird und man die Reduktionsmittelzugabe entsprechend pro Bett dosiert.

Aus den obengenannten Reaktionsgleichungen ergibt sich, daß der Grenzwert der Umsetzung z.B. von NO mittels Ammoniak bei einem Mol-Verhältnis von $NH_3$:NO bei 4/6, also bei 0,67 liegt. Wird die Auslegung des Reaktors erfindungsgemäß derart gestaltet, daß in dem ersten Bett der Abbau auf 67 % beschränkt bleibt, kann bei hoher Belastung des Katalysators in diesem Teil der Grenzwert der Umsetzung eingestellt werden, auch unter Inkaufnahme eines gewissen Schlupfes. Wird das folgende Bett unter gleichen Belastungen betrieben, wird in diesem wiederum 67 % Umsatz erzielt.

Geht man beispielsweise von 1000 ppm NO am Eingang des Reaktors aus, so ergeben sich bei einem dreistufigen Reaktor folgende Ergebnisse:

1. Bett -Eingang 1000 ppm NO x 0,67 = 670 ppm NO entfernt Ausgang = 330 ppm NO,
2. Bett -Eingang 330 ppm NO x 0,67 = 221 ppm NO entfernt Ausgang = 109 ppm NO,
3. Bett - Eingang 109 ppm NO x 0,67 = 73 ppm NO entfernt Ausgang = 36 ppm NO.

Damit beträgt der Gesamtumsatz in einer 2-bettigen Anordnung

$$= \frac{1000 - 109}{1000} = 89,1\ \%$$

Der Umsatz bei einer 3-bettigen Anordnung beträgt

$$= \frac{1000 - 36}{1000} = 96,4\ \%.$$

Die Ammoniakdosierung wird in diesem Fall wie folgt vorgenommen

    1. Bett Dosierung überstöchiometrisch

    2. Bett Dosierung annähernd stöchiometrisch

    3. Bett Dosierung unterstöchiometrisch

Über die Gesamtreaktion gesehen erreicht man ein Mol-Dosierverhältnis von unter 1, maximal 0,9, bei einem Umsatz von 96 %, ohne daß ein wesentlicher Ammoniakschlupf eintritt.

Die Erfindung ist nicht auf die Verwendung von Ammoniak als Reduktionsmittel beschränkt. Setzt man andere vergleichbare Reduktionsmittel ein, so können die Vorteile der Erfindung ebenfalls dadurch erzielt werden, daß man den Umsatz in einem Bett jeweils auf einen maximalen Prozentwert beschränkt und die Reduktionsmittel zuvor entsprechend pro Bett dosiert.

**Ansprüche**

1. Verfahren zur selektiven katalytischen Reduktion von Stickoxiden mittels Ammoniak als Reduktionsmittel ohne wesentlichen Überdruck in einem ein-oder mehrbettigen Reaktor, dadurch gekennzeichnet, daß man den Reaktor in der Weise auslegt und betreibt, daß der Umsatz an Stickoxid pro Bett auf maximal 67 % begrenzt wird und man die Reduktionsmittelzugabe entsprechend pro Bett dosiert.

2. Verfahren nach Anspruch 1, dadurch gekennzeichnet, daß man das Molverhältnis zu umgesetzten Stickoxiden im ersten Bett überstöchiometrisch und in den nachgeschalteten Betten annähernd unterstöchiometrisch dosiert.